# EUROPÄISCHE PATENTSCHRIFT

(11) **EP 0 646 775 B1**
(45) Veröffentlichungstag und Bekanntmachung des Hinweises auf die Patenterteilung: **20.08.1997**
(21) Anmeldenummer: 94113981.8
(22) Anmeldetag: 07.09.1994
(51) Int. Cl.: G01D 5/14, F16H 59/70

(54) **Vorrichtung zur Drehwinkeldetektierung**
Apparatus for angular position determination
Dispositif de mesure de l'angle de rotation

(30) Priorität: 04.10.1993 DE 4333800
(43) Veröffentlichungstag der Anmeldung: 05.04.1995
(73) Patentinhaber: Deutsche Automobilgesellschaft mbH, 38114 Braunschweig (DE)
(72) Erfinder: Daetz, Michael, D-38473 Tiddische (DE); Pohlmann, Roger, D-38110 Braunschweig (DE)
(74) Vertreter: Maute, Hans-Jürgen, Dipl.-Ing.

(56) Entgegenhaltungen:
- DE-C- 4 121 410
- GB-A- 2 093 295
- GB-A- 2 100 343
- PATENT ABSTRACTS OF JAPAN vol. 8, no. 1 (P-246) (1438) 6. Januar 1984 & JP-A-58 166 204 (NIPPON DENSO K.K.)
- PATENT ABSTRACTS OF JAPAN vol. 12, no. 471 (M-773) 9. Dezember 1988 & JP-A-63 192 930 (ISHIKAWA MASAMICHI) 10. August 1988

## Beschreibung

Die Erfindung betrifft eine Vorrichtung zur Drehwinkeldetektierung einer Welle, insbesondere einer Getriebeschaltwelle eines Wechselgetriebes für ein Kfz.

Eine Vorrichtung zum Erkennen des Schaltzustandes eines Getriebes ist aus der Druckschrift G 91 16 131 U1 bekannt. Hiernach ist die Getriebeschaltwelle über ein Trägerelement mit einem einseitig freiliegenden Permanentmagneten starr verbunden. Im Bewegungsbereich dieses Permanentmagneten liegt eine Anordnung von Reed-Schaltern, wobei für jede einer Schaltposition des Getriebes entsprechenden Position des Permamentmagneten ein Reed-Schalter vorgesehen ist. Bei dieser bekannten Vorrichtung liegt in jeder Position des Magneten zwischen ihm und dem jeweiligen Reed-Schalter eine Blende aus magnetisch abschirmendem Material, die mit Durchbrüchen im Bereich der Reed-Schalter versehen ist, so daß die zugeordneten Reed-Schalter von einer ausreichenden Magnetfeldstärke durchflutet werden, während jedoch die übrigen Reed-Schalter abgeschirmt werden. Diese Vorrichtung kann direkt im Getriebegehäuse untergebracht werden, trotz der dort herrschenden Umgebungsbedingungen, die durch extreme Temperaturwechsel, Vibrationen und Unzugänglichkeit gekennzeichnet sind.

Ein Nachteil dieser bekannten Anordnung liegt darin, daß die Anzahl der Reed-Schalter der Anzahl der zu erkennenden Schaltzustände entspricht. Somit wird bei einer großen Anzahl von zu detektierenden Schaltzuständen die die Sensoren tragende Anordnung sehr groß und infolgedessen nimmt auch der Raumbedarf dieser Anordnung zu. Schließlich ist das mit der bekannten Vorrichtung dargestellte Konzept im Hinblick auf eine Erweiterung der zu erkennenden Schaltzustände sehr unflexibel. Denn dies bedarf zunächst einer Erhöhung der Anzahl der Reed-Schalter und somit auch einer Anpassung der die Sensoren tragenden Anordnung.

Weiterhin ist aus der GB 2 093 295 A eine Vorrichtung zur Drehwinkeldetektion von in einem Spielautomaten sich drehenden Scheiben offenbart, bei der eine U-förmige Trägervorrichtung vorgesehen ist, deren erster Schenkel mehrere Magnete trägt und deren zweiter Schenkel jeweils den Magneten zugeordnete Hallsensoren aufweist. In dem von dem Zwischenraum aufgespannten Schenkeln bewegt sich eine Scheibe, die von den Magnetfeldern durchsetzbar ist und Codierelemente trägt, so daß entweder das Magnetfeld von einem Codierelement abgeschirmt wird oder das Magnetfeld durch die Scheibe hindurch auch den zugeordneten Sensor durchsetzt.

Diese bekannte Vorrichtung weist den Nachteil auf, daß eine große Anzahl von Magneten erforderlich ist, so werden beispielsweise zur Detektion von 16 Zuständen vier Magnete benötigt.

In ähnlicher Weise ist in der DE 41 21 410 C1 eine Vorrichtung zur Erkennung des Schaltzustandes eines Getriebes beschrieben, bei welcher mittels einer Lochmaske die Felder von Permanentmagneten beeinflußt werden, wobei die Permanentmagneten auf gegenüberliegende Reed-Schalter wirken.

Schließlich ist aus der JP-A-63-192 930 eine Vorrichtung zur Drehwinkeldetektierung bekannt, bei der ein Schenkel eines U-förmigen Trägers zwei Magnete trägt und jedem Magneten jeweils ein Hallsensor auf dem anderen Schenkel des Trägers angeordnet ist. Dabei sind die Magnete bezüglich ihren Polachsen parallel, bezüglich ihren Magnetpolen jedoch antiparallel angeordnet.

Der Erfindung liegt daher die Aufgabe zugrunde, eine Vorrichtung zur Drehwinkeldetektierung einer Welle der eingangs genannten Art anzugeben, die im Hinblick auf die Anzahl der zu erkennenden Stellungen der Welle mit einer minimalen Anzahl von Sensoren auskommt.

Die Lösung dieser Aufgabe ergibt sich aus den Merkmalen des Patentanspruches 1 als auch des Patentanspruches 2.

Nach der erstgenannten Lösung ist eine U-förmige Trägeranordnung mit auf deren Schenkel angeordneten Magneten und zwei Sensoren vorgesehen, wobei die Polachse des Magneten sich parallel zum Schenkel erstreckt und die Sensoren auf einer zur Polachse parallelen Linie in Nachbarschaft zum Magneten liegen. Ferner ist auf der dem Magneten abgewandten Seite des die Sensoren tragenden Schenkels eine Abschirmplatte aus ferromagnetischem Material angeordnet. Schließlich ist eine scheibenförmig ausgebildete Abschirmvorrichtung vorgesehen, die starr mit der Welle verbunden ist und sich im Zwischenraum der beiden Schenkel der Trägeranordnung bewegt, wobei diese Abschirmvorrichtung Mittel aufweist, welche das die Sensoren durchdringende Magnetfeld für jeden Sensor in vorbestimmter Weise derart beeinflußt, daß die Sensoren ein die Stellung der Welle eindeutig kennzeichnendes Signal erzeugen.

Nach der zweitgenannten Lösung ist die Trägeranordnung dagegen E-förmig ausgebildet, so daß der mittlere Schenkel den Magneten trägt und auf den äußeren Schenkeln jeweils ein Paar Sensoren montiert sind. Die Polachse des Magneten ist gleichfalls parallel zum mittleren Schenkel ausgerichtet und in gleicher Weise wie bei der erstgenannten Lösung sind auf den äußeren Schenkeln Abschirmplatten vorgesehen. Die Abschirmvorrichtung besteht dagegen aus einem Paar von scheibenförmigen Körpern, die sich jeweils in den Zwischenräumen der Schenkel bewegen und in gleicher Weise wie die Abschirmvorrichtung der erstgenannten Lösung Mittel zur Beeinflussung des die Sensoren durchdringenden Magnetfeldes tragen.

Die erfindungsgemäße Anordnung erlaubt nun in jeder zu detektierenden Stellung der Welle das die Sensoren durchdringende Magnetfeld für jeden einzelnen Sensor mittels der Abschirmvorrichtung in vorbestimmter Weise zu beeinflussen. So kann durch die Ausgestaltung der Abschirmvorrichtung in jeder zur detektierenden Stellung der Welle festgelegt werden, ob kein Sensor, nur ein Sensor, mehrere Sensoren oder ob alle Sensoren angesprochen werden. Eine solche Ausgestaltung der Abschirmvorrichtung entspricht daher einer Codierung jeder der zu detektierenden Stellungen der Welle. Werden beispielsweise zwei bzw. vier Sensoren eingesetzt, können damit vier bzw. sechzehn Schaltzustände detektiert werden gegenüber lediglich zwei oder vier Schaltzuständen bei der oben zuerst beschriebenen bekannten Vorrichtung.

Damit die Abschirmvorrichtung den gewünschten Einfluß auf das den jeweiligen Sensor durchdringende Magnetfeld nimmt, bestehen sie aus ferromagnetischem Material und weisen Durchbrüche auf, so daß das entsprechende Magnetfeld entweder abgeschirmt wird oder den Sensor unabgeschwächt durchdringen kann.

Bei einer anderen vorteilhaften Ausführungsform besteht dagegen die Abschirmvorrichtung aus nicht-magnetischem Material, wobei an bestimmten Stellen zur Beeinflussung des den jeweiligen Sensor durchdringenden Magnetfeldes ferromagnetisches Material sich befindet, um auch hierdurch den Sensor entweder abzuschirmen oder ihn mit der vollen Stärke des Magnetfeldes durchfluten zu lassen.

In vorteilhafter Weise können als Sensoren Hallsensoren, Reed-Schalter oder magneto-resistive Sensoren eingesetzt werden.

Mit Vorteil kann die erfindungsgemäße Vorrichtung zum Erkennen des Schaltzustandes eines Wechselgetriebes, insbesondere auch eines automatischen Wechselgetriebes für Kraftfahrzeuge eingesetzt werden.

Darüber hinaus ergeben sich weitere Einsatzmöglichkeiten im Kfz, so zum Erkennen der Stellung der Nockenwelle einer Verbrennungskraftmaschine oder auch zur Erkennung der Stellung des Drosselklappenpotentiometers im Ansaugrohr.

Die Erfindung soll im folgenden anhand eines Ausführungsbeispieles im Zusammenhang mit den Zeichnungen dargestellt und erläutert werden. Es zeigen:
- Figur 1: eine Querschnittsdarstellung eines Ausführungsbeispieles der erfindungsgemäßen Anordnung und
- Figur 2: eine Längsschnittdarstellung des Ausführungsbeispieles nach Figur 1 entlang des Schnittes 2-2.

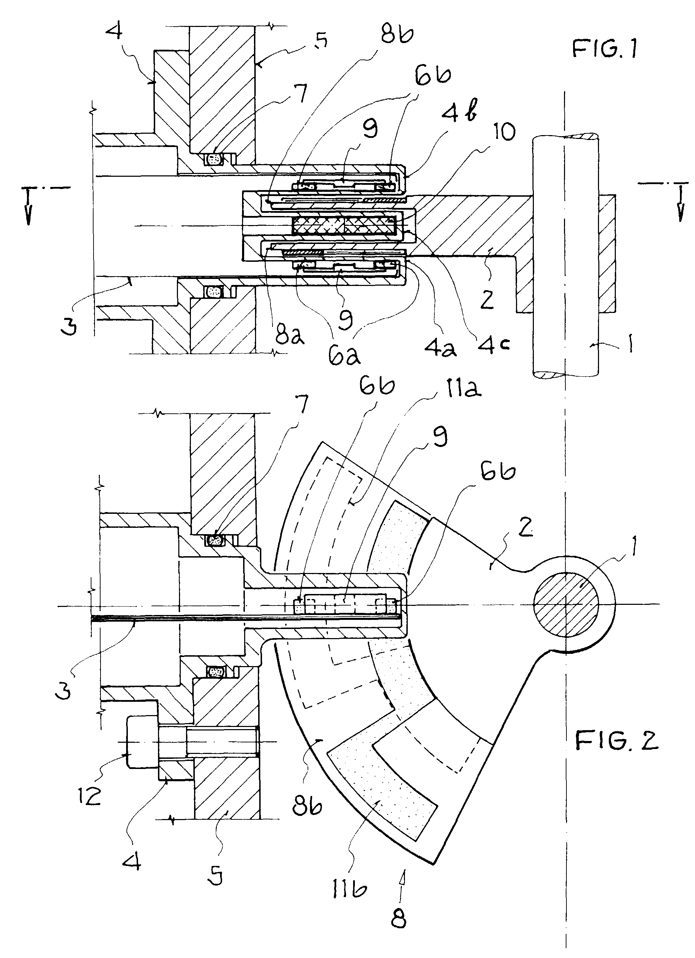

Das Ausführungsbeispiel gemäß den Figuren 1 und 2 stellt eine Vorrichtung zum Erkennen des Schaltzustandes eines Wechselgetriebes eines Kraftfahrzeuges dar, die in einem Getriebegehäuse eingebaut ist. Ein Teil dieser Getriebegehäusewand ist mit dem Bezugszeichen 5 bezeichnet und besitzt im Bereich einer Schaltwelle 1 eine Öffnung, in der eine Trägeranordnung 4 eingebaut ist. Diese Trägeranordnung 4 ist mittels einer Schraube 12 an der Getriebegehäusewand 5 befestigt und zum Getriebeinneren mit einer Dichtung 7 abgedichtet. Diese Trägeranordnung 4 ist wie aus der Figur 1 ersichtlich ist, E-förmig mit einem mittleren Schenkel 4c und zwei äußeren Schenkeln 4a und 4b ausgebildet. Der mittlere Schenkel 4c dieser Trägeranordnung 4 enthält einen Dauermagneten 10, während die beiden äußeren Schenkel 4a und 4b jeweils zwei Hallsensoren 6a und 6b enthalten. Diese Hallsensoren 6a und 6b sind auf einer Leiterplatte 3 angeordnet, die in die Trägeranordnung 4 eingelassen ist. Nach außen hin wird diese Trägeranordnung 4 durch ein Steckerteil, das mit der Leiterplatte 3 verbunden ist, verschlossen.

Die in den beiden Schenkeln 4a und 4b angeordneten Hallsensoren 6a und 6b sind in Höhe der Stirnseiten des Dauermagneten 10 angebracht, wobei sich auf der dem Magneten abgewandten Seite der Hallsensoren ein aus ferromagnetischem Material bestehende Abschirmplatte 9 befindet, die der Feldverstärkung des magnetischen Kreises und der Umlenkung des magnetischen Flusses bei der Abschirmung der Hallsensoren durch die Abschirmvorrichtung 8 dient.

Die Getriebeschaltwelle 1 ist mit einem Trägerelement 2, das die Abschirmvorrichtung 8 trägt, starr verbunden. Diese Abschirmvorrichtung 8 weist gemäß der Figur 1 einen U-förmigen Querschnitt auf, wobei die beiden Schenkel 8a und 8b scheibenförmig ausgebildet sind, so daß sie sich zwischen den Schenkeln 4a und 4c bzw. 4b und 4c bewegen können. Die beiden Schenkel 8a und 8b weisen zusammen mit dem Trägerelement 2 jeweils die Form eines Kreissegmentes mit einem Zentrumswinkel von ca. 90° auf.

Zur Beeinflussung des die Sensoren 6a und 6b durchfließenden Magnetfeldes sind auf den scheibenförmigen Schenkeln 8a und 8b der Abschirmvorrichtung 8 Abschirmbleche 11a und 11b aus ferromagnetischem Material angebracht, die, wenn sie sich zwischen einem Sensor und dem Magneten befinden, magnetisch den entsprechenden Sensor abschirmen. Ferner weisen diese Abschirmbleche 11a bzw. 11b Durchbrüche auf, wodurch bei entsprechender Stellung dieses Durchbruches vor einem Sensor dieser von dem magnetischen Feld durchsetzt wird. Somit ergeben sich für jeden Sensor zwei Zustände, nämlich den Zustand "nicht-abgeschirmt", d. h. der Sensor spricht auf das magnetische Feld an, oder der Zustand "abgeschirmt", das bedeutet, daß der Hallsensor nicht anspricht. Gemäß der Figur 1 sind in jedem Schenkel 4a und 4b der Trägeranordnung 4 jeweils zwei Hallsensoren 6a und 6b angeordnet, so daß man über eine Codierung der Abschirmvorrichtung 8, nämlich durch eine entsprechende Verteilung der Durchbrüche in den Abschirmblechen 11a und 11b, bis zu sechzehn Schaltzustände des Getriebes ermitteln kann.

Die Anordnung gemäß den Figuren 1 und 2 kann vielfältigerweise abgeändert werden. So ist es beispielsweise auch möglich, die Trägeranordnung 4 lediglich unter Fortfall eines Schenkels U-förmig auszubilden, so daß auch ein Schenkel der Abschirmvorrichtung 8 entfallen kann. Diese Anordnung als auch die in den Figuren 1 und 2 beschriebene Anordnung kann mit jeder gewünschten Anzahl von Sensoren bestückt werden. Die Anzahl der detektierbaren Schaltzustände ergeben sich aus der Formel 2ⁿ, wenn n die Anzahl der Sensoren angibt. Somit können schon lediglich mit zwei Sensoren vier Stellungen der Getriebewelle festgestellt werden, während hierzu bei der bekannten Vorrichtung die doppelte Anzahl notwendig wäre. Bei zunehmender Anzahl der zu detektierenden Stellungen der Getriebewelle wird dieses Verhältnis zugunsten der erfindungsgemäßen Vorrichtung noch besser.

Weiterhin ist es denkbar, daß die Abschirmvorrichtung 8 aus ferromagnetischem Material besteht, wobei dann die entsprechende Codierung wie bei den oben beschriebenen Abschirmblechen 11a und 11b mittels Durchbrüchen erfolgt. Dies hätte jedoch den Nachteil, daß bei einer Änderung der Codierung die gesamte Abschirmvorrichtung ausgetauscht werden müßte.

Bei dem oben beschriebenen Ausführungsbeispiel mit den Abschirmblechen 11a und 11b ist es bei einer Änderung der Codierung lediglich notwendig, diese Abschirmbleche auszutauschen.

Anstelle der in dem oben beschriebenen Ausführungsbeispiel verwendeten Hallsensoren, können auch andere magnetisch empfindliche Sensoren, beispielsweise Reed-Schalter oder magneto-resistive Sensoren verwendet werden.

## Patentansprüche

1. Vorrichtung zur Drehwinkeldetektierung einer Welle (1), insbesondere einer Getriebeschaltwelle eines Wechselgetriebes für ein Kraftfahrzeug, bei der die Stellung der Welle mittels im Gehäuse (5) eingebauter magnetfeldempfindlicher Sensoren (6) kontakt- und berührungslos abgetastet wird und sich am Ort der Sensoren (6) die Magnetfeldstärke in Abhängigkeit der Stellung der Welle (1) ändert, mit folgenden Merkmalen:
a) es ist eine U-förmige Trägeranordnung (4) mit einem ersten und zweiten Schenkel vorgesehen,
b) ein Magnet (10) ist auf dem ersten Schenkel der Trägeranordnung (4) derart angeordnet, daß dessen Polachse sich parallel zum ersten Schenkel erstreckt,
c) ein Paar Sensoren sind auf dem zweiten Schenkel der Trägeranordnung (4) in räumlicher Nachbarschaft zu dem Magneten (10) auf einer zu dessen Polachse parallelen Linie derart angeordnet, daß diese von dem Magnetfeld durchsetzt werden,
d) ferner ist auf der dem Magneten (10) abgewandten Seite des zweiten Schenkels der Trägeranordnung (4) eine Abschirmplatte (9) aus ferromagnetischem Material angeordnet,
e) ferner ist eine Abschirmvorrichtung (8) vorgesehen, die starr mit der Welle (1) verbunden ist, wobei diese Abschirmvorrichtung (8) scheibenförmig ausgebildet ist und sich im Zwischenraum des ersten und zweiten Schenkels der Trägeranordnung (4) bewegt, und
f) schließlich weist die Abschirmvorrichtung (8) Mittel (11a) auf, welche das die Sensoren durchdringende Magnetfeld für jeden Sensor (6) in vorbestimmter Weise derart beeinflußt, daß die Sensoren (6) ein die Stellung der Welle (1) eindeutig kennzeichnendes Signal erzeugen.

2. Vorrichtung zur Drehwinkeldetektierung einer Welle (1), insbesondere einer Getriebeschaltwelle eines Wechselgetriebes für ein Kraftfahrzeug, bei der die Stellung der Welle mittels im Gehäuse (5) eingebauter magnetfeldempfindlicher Sensoren (6) kontakt- und berührungslos abgetastet wird und sich am Ort der Sensoren (6) die Magnetfeldstärke in Abhängigkeit der Stellung der Welle (1) ändert, mit folgenden Merkmalen:
a) es ist eine E-förmige Trägeranordnung (4) mit zwei äußeren Schenkeln (4a, 4b) und einem inneren Schenkel (4c) vorgesehen,
b) ein Magnet (10) ist auf dem mittleren Schenkel (4c) der Trägeranordnung (4) derart angeordnet, daß dessen Polachse sich parallel zum mittleren Schenkel (4c) erstreckt,
c) ein Paar von Sensoren (6a, 6b) sind jeweils auf den äußeren Schenkeln (4a, 4b) der Trägeranordnung in räumlicher Nachbarschaft zu dem Magneten (10) auf einer zu dessen Polachse parallelen Linie derart angeordnet, daß diese von dem Magnetfeld durchsetzt werden,
d) ferner sind auf den dem Magneten (10) abgewandten Seiten der äußeren Schenkel (4a, 4b) der Trägeranordnung (4) jeweils eine Abschirmplatte (9) aus ferromagnetischem Material angeordnet,
e) ferner ist eine Abschirmvorrichtung (8) vorgesehen, die starr mit der Welle (1) verbunden ist, wobei diese Abschirmvorrichtung (8) aus einem Paar von scheibenförmigen Körpern (8a, 8b) besteht, die sich jeweils in dem Zwischenraum des mittleren Schenkels (4c) und einem der beiden äußeren Schenkeln (4a, 4c) bewegen, und
f) schließlich weist die Abschirmvorrichtung (8) Mittel (11a, 11b) auf, welche das die Sensoren durchdringende Magnetfeld für jeden Sensor (6) in vorbestimmter Weise derart beeinflußt, daß die Sensoren (6) ein die Stellung der Welle (1) eindeutig kennzeichnendes Signal erzeugen.

3. Vorrichtung nach Anspruch 1 oder 2, wobei die Mittel (11a, 11b) zur Beeinflussung des die Sensoren (6) durchsetzenden Magnetfeldes darin bestehen, daß die Abschirmvorrichtung (8) aus ferromagnetischem Material besteht und wenigstens einen Durchbruch aufweist.

4. Vorrichtung nach Anspruch 1 oder 2, wobei die Mittel zur Beeinflussung des die Sensoren (6) durchsetzenden Magnetfeldes darin bestehen, daß die Abschirmvorrichtung (8) an bestimmten Stellen ferromagnetisches Material aufweist und ansonsten aus unmagnetischem Material aufgebaut ist.

5. Vorrichtung nach einem der vorangehenden Ansprüche, wobei als Sensoren (6a, 6b) Hallsensoren, Reed-Schalter oder magneto-resistive Sensoren verwendet werden.

6. Verwendung der Vorrichtung nach einem der vorangehenden Ansprüche zum Erkennen des Schaltzustandes eines Wechselgetriebes für ein Kraftfahrzeug.

7. Verwendung der Vorrichtung nach einem der Ansprüche 1 bis 5 zum Erkennen des Schaltzustandes eines automatischen Wechselgetriebes für ein Kraftfahrzeug.

8. Verwendung der Vorrichtung nach einem der Ansprüche 1 bis 5 zum Erkennen der Stellung der Nockenwelle einer Kraftfahrzeug-Verbrennungskraftmaschine.

9. Verwendung der Vorrichtung nach einem der Ansprüche 1 bis 5 zum Erkennen der Stellung eines Drosselklappenpotentiometers im Ansaugrohr einer Kraftfahrzeug-Verbrennungskraftmaschine.

## Revendications

1. Dispositif pour la détection de l'angle de rotation d'un axe (1) (notamment d'un axe de changement de rapport d'une boîte de vitesses pour véhicule automobile, dans lequel la position de l'axe est palpée sans contact électrique ni physique au moyen de capteurs (6) sensibles au champ magnétique montés dans le carter (5), et le force du champ magnétique varie au niveau des capteurs (6) en fonction de la position de l'axe (1), ce dispositif possédant les caractéristiques suivantes :
a) il est prévu un dispositif support (4) en forme de U qui possède des première et deuxième branches,
b) un aimant (10) est agencé sur la première branche du dispositif support (4) de manière que son axe polaire s'étende parallèlement à la première branche,
c) deux capteurs sont agencés sur la deuxième branche du dispositif support (4) dans le voisinage de l'aimant (10), sur une ligne parallèle à l'axe polaire de cet aimant, de telle manière que ces capteurs soient traversés par le champ magnétique,
d) par ailleurs, une plaque écran (9) en matière ferromagnétique est agencée sur le côté de la deuxième branche (4) qui est éloigné de 1 élément (10),
e) il est prévu en outre un dispositif écran (8) qui est relié rigidement à l'axe (1), ce dispositif écran (8) présentant la forme d'une plaque et se déplaçant dans l'intervalle entre les premières et deuxièmes branches du dispositif support (4), et
f) finalement, le dispositif écran (8) présente des moyens (11) qui agissent sur le champ magnétique traversant les capteurs pour chaque capteur (6) d'une façon prédéterminée telle que les capteurs (6) produisent un signal qui caractérise de façon univoque la position de l'axe (1).

2. Dispositif pour la détection de l'angle de rotation d'un axe (1) (notamment d'un axe de changement de rapport d'une boîte de vitesses pour véhicule automobile, dans lequel la position de l'axe est palpée sans contact électrique ni physique au moyen de capteurs (6) sensibles au champ magnétique montés dans le carter (5), et la force du champ magnétique varie au niveau des capteurs (6) en fonction de la position de l'axe (1), ce dispositif possédant les caractéristiques suivantes :
a) il est prévu un dispositif support (4) en forme de E qui possède deux branches extérieures (4a, 4b) et une branche intérieure (4c),
b) un aimant (10) est agencé sur la branche centrale (4c) du dispositif support (4) de manière que son axe polaire s'étende parallèlement à la branche centrale (4c),
c) deux capteurs (6a, 6b) sont agencés respectivement sur les branches extérieures du dispositif support (4) dans le voisinage de l'aimant (10), sur une ligne parallèle à l'axe polaire de cet aimant, de telle manière que ces capteurs soient traversés par le champ magnétique,
d) par ailleurs, une plaque écran (9) en matière ferromagnétique est agencée sur chacun des côtés de la branche extérieure (4c) du dispositif support (4).
e) il est prévu en outre un dispositif écran (8) qui est relié rigidement à l'axe (1), ce dispositif écran (8) étant composé d'une paire de corps en forme de plaque qui se déplacent chacune dans l'intervalle entre la branche centrale (4c) du dispositif support et l'une des deux branches extérieures (4a, 4b)
f) finalement, le dispositif écran (8) présente des moyens (11a, 11b) qui agissent sur le champ magnétique traversant les capteurs pour chaque capteur (6) d'une façon prédéterminée telle que les capteurs (6) produisent un signal qui caractérise de façon univoque la position de l'axe (1).

3. Dispositif selon la revendication 1 ou 2 dans lequel les moyens (11a, 11b) servant à agir sur le champ magnétique qui traverse les capteurs (6) sont constitués par le fait que le dispositif écran (8) est composé d'une matière ferromagnétique et présente au moins une interruption.

4. Dispositif selon la revendication 1 ou 2, dans lequel les moyens servant à agir sur le champ magnétique qui traverse les capteurs (6) sont constitués par le fait que le dispositif d'écran (8) présente de la matière ferromagnétique en certains endroits et est composé d'une matière magnétique pour le reste.

5. Dispositif selon une des revendications précédentes, dans lequel on utilise comme capteurs (6, 6b) des capteurs à effet Hall, des interrupteurs à lamelles, des capteurs magnétorésistifs.

6. Utilisation du dispositif selon une des revendications précédentes pour la détection de l'état de rapport d'une boîte de vitesses d'un véhicule automobile.

7. Utilisation du dispositif selon une des revendications 1 à 5 pour la détection de l'état de rapport d'une boîte de vitesses automatique pour un véhicule automobile.

8. Utilisation du dispositif selon une des revendications 1 à 5 pour la détection de la position de l'arbre à cames d'un moteur à combustion interne de véhicule automobile.

9. Utilisation du dispositif selon une des revendications 1 à 5 pour la détection de la position d'un potentiomètre de volet de réglage logé dans le tube d'admission d'un moteur de combustion interne de véhicule automobile.

## Claims

1. Device for detecting the angle of rotation of a shaft (1), in particular of a gearshift shaft of a change-speed gearing for a motor vehicle, wherein the position of the shaft is contactlessly scanned by means of magnetically sensitive sensors (6) installed in the gearbox (5) and at the location of the sensors (6) the magnetic field strength alters in dependence upon the position of the shaft (1), having the following features:
a) a U-shaped carrier arrangement (4) having a first and second limb is provided,
b) a magnet (10) is disposed on the first limb of the carrier arrangement (4) in such a way that its polar axis extends parallel to the first limb,
c) a pair of sensors are disposed on the second limb of the carrier arrangement (4) in the spatial vicinity of the magnet (10) on a line parallel to the polar axis of said magnet in such a way as to be permeated by the magnetic field,
d) there is further disposed, at the side of the second limb of the carrier arrangement (4) remote from the magnet (10), a screening plate (9) made of ferromagnetic material,
e) a screening device (8) is further provided, which is rigidly connected to the shaft (1), said screening device (8) being disk-shaped and moving in the gap between the first and second limb of the carrier arrangement (4), and
f) finally the screening device (8) comprises means (11a) which influence the magnetic field penetrating the sensors in a predetermined manner for each sensor (6) such that the sensors (6) produce a signal clearly characterizing the position of the shaft (1).

2. Device for detecting the angle of rotation of a shaft (1), in particular of a gearshift shaft of a change-speed gearing for a motor vehicle, wherein the position of the shaft is contactlessly scanned by means of magnetically sensitive sensors (6) installed in the gearbox (5) and at the location of the sensors (6) the magnetic field strength alters in dependence upon the position of the shaft (1), having the following features:
a) an E-shaped carrier arrangement (4) having two outer limbs (4a, 4b) and one inner limb (4c) is provided,
b) a magnet (10) is disposed on the middle limb (4c) of the carrier arrangement (4) in such a way that its polar axis extends parallel to the middle limb (4c),
c) a pair of sensors (6a, 6b) are disposed on each of the outer limbs (4a, 4b) of the carrier arrangement in the spatial vicinity of the magnet (10) on a line parallel to the polar axis of said magnet so as to be permeated by the magnetic field,
d) there is further disposed, at each side of the outer limbs (4a, 4b) of the carrier arrangement (4) remote from the magnet (10), a screening plate (9) made of ferromagnetic material,
e) a screening device (8) is further provided, which is rigidly connected to the shaft (1), said screening device (8) comprising a pair of disk-shaped bodies (8a, 8b) which move in each case in the gap between the middle limb (4c) and one of the two outer limbs (4a, 4b), and
f) finally the screening device (8) comprises means (11a, 11b) which influence the magnetic field penetrating the sensors in a predetermined manner for each sensor (6) such that the sensors (6) produce a signal clearly characterizing the position of the shaft (1).

3. Device according to claim 1 or 2, wherein the means (11a, 11b) of influencing the magnetic field permeating the sensors (6) are such that the screening device (8) is made of ferromagnetic material and has at least one opening.

4. Device according to claim 1 or 2, wherein the means of influencing the magnetic field permeating the sensors (6) are such that the screening device (8) at specific points comprises ferromagnetic material and is otherwise made of non-magnetic material.

5. Device according to one of the preceding claims, wherein Hall sensors, reed switches or magnetoresistive sensors are used as sensors (6a, 6b).

6. Use of the device according to one of the preceding claims to detect the shift state of a change-speed gearing for a motor vehicle.

7. Use of the device according to one of claims 1 to 5 to detect the shift state of an automatic change-speed gearing for a motor vehicle.

8. Use of the device according to one of claims 1 to 5 to detect the position of the camshaft of an i.c. engine of a motor vehicle.

9. Use of the device according to one of claims 1 to 5 to detect the position of a throttle potentiometer in the intake manifold of an i.c. engine of a motor vehicle.
